# EUROPEAN PATENT APPLICATION

(11) **EP 4 721 948 A1**
(43) Date of publication of application: **08.04.2026**
(21) Application number: 24383064.3
(22) Date of filing: 02.10.2024
(51) Int. Cl.: B29C 45/00, B29C 45/38, B29C 45/28

(54) **INJECTION MOULD AND METHOD FOR MANUFACTURING PARTS**

(71) Applicant: Comercial de Utiles y Moldes, S.A., 08960 Sant Just Desvern, Barcelona (ES)
(72) Inventor: NAVARRA PRUNA, Alberto, 08960 SANT JUST DESVERN (Barcelona) (ES)
(74) Representative: Herrero & Asociados, S.L.

(57) **Abstract**

The mould comprises a cavity (7) into which material is injected through a casting (2); a separator (3) for opening or closing the communication between the cavity (7) and the casting (2), separating a part (1) from the casting (2) in its closed position; and a compartment (4) which is closed when the separator (3) opens the communication between the cavity (7) and the casting (2) and which is open when the separator (3) closes the cavity (7) and the casting (2), the movements of the separator (3) and the opening and closing of the compartment (4) being synchronized.

The method comprises closing the communication between the cavity (7) and the casting (2), separating the part (1) from the casting (2) and opening a compartment (4) for the material at the same time as the communication between the cavity (7) and the casting (2) is closed.

## Description

### Object of the invention

The present invention relates to an injection mould and to a method for manufacturing parts.

### Background of the invention

All thermoplastic injection moulded parts have a production process in which there is an injection mould comprising a cavity plate and a punch plate, which, duly machined, form the mould cavity in order to be able to cast or inject between the machined spaces of the parts to be injected.

These plates are guided by columns housed in the cavity plate and bushings in the punch plate so that each time the mould is opened and closed, both plates are perfectly aligned in order to reproduce a new part with the same dimensions and the same details of its figure in each injection cycle.

In addition, the mould also incorporates what is known as an ejector bridge, duly aligned with the plates described above, which is duly anchored in the mould and serves as a mechanism for ejecting the injected product.

All thermoplastic injection moulded parts require melting of the prepared material, which is supplied in standardised form as small cylinders.

The manufacturing process consists of installing the mould in the injection moulding machine. These machines comprise a fixed platen on the injection side and a moving platen for the ejection part. The cavity part of the mould is installed on the fixed platen of the machine, while the punch part is installed on the movable platen of the machine.

When the machine closes, the punch platen is coupled to the mould cavity platen, so that the mould guides ensure that the positioning between the two halves is perfectly matched and that the machining operations carried out in the cavity and punch are completely evenly matched, forming the housing necessary for the material to be injected to completely fill this cavity.

The machine has the appropriate injection system for each model and in a hopper fitted out as an injection material store, the material is deposited in granules and by means of a properly heated screw conveyor, it is melted so that it can be injected into the mould cavity with an appropriate melting point and pressure control.

A cooling circuit is circulated through holes machined in the cavity plate and punch plate to accelerate the solidification of the material and ensure that it has the right consistency to open the mould and eject the part produced.

All injected parts have an opening called material inlet, which is part of the mould machining, through which the material injected by the machine enters under pressure. This material inlet must always be cut and manipulated to conceal the mark that is always part of the product, and which in many cases, due to the complexity of the part or its destination, cannot be visible.

Therefore, a cutting and handling process is necessary to reduce or eliminate the mark produced by the material entering the mould, which increases the cost of the parts produced.

### Description of the invention

Therefore, an objective of the present invention is to provide an injection mould and a method for manufacturing parts, which enables the manufactured parts to have a better finish at a lower cost than with the conventional cutting and handling process.

With the injection mould and the method of the invention, the aforementioned disadvantages are solved, with other advantages that will be described below.

The injection mould and method according to the present invention are described in the respective independent claims, and the dependent claims include additional features which are optional.

The injection mould according to the present invention comprises a cavity into which material is injected through a casting, which material forms a part when solidified.

In addition, it also comprises a separator which is movable to open or close the communication between the cavity and the casting, separating the part from the casting in its closed position, and a compartment which is closed when the separator opens the communication between the cavity and the casting and which is open when the separator closes the cavity and the casting, the movements of the separator and the opening and closing of the compartment being synchronised with each other.

Thus, the cutting or separation of the part from the casting is cut during the manufacturing process itself, when the material has not yet solidified, eliminating the need for further cutting or cold treatment of the part after it has been cast.

This closing or separation by means of the separator can be carried out throughout the injection cycle, in proportion to the filling cycle of the product to be injected, or simply close the material passage at the same moment that the cavity of the part has just been filled, as if it were a tap.

It is important to carry out the separation process as quickly as possible, as the temperature decreases to solidify the part.

The separator remains in the position where it separates the part from the casting until the required cooling time for the part has elapsed. The part is ejected in this way, completely separated from the casting.

When the machine is shut down again for the next injection cycle, the separator returns to its injection position.

It therefore performs the separation or cutting during the injection cycle and relies on an actuator to perform the separation or cutting in a non-aggressive manner, ensuring the quality of its finish, which is essential for parts that require a visually pleasing final appearance. In this way, costly second operations on the finished product can be completely eliminated.

It should be noted that the material in a fluid state behaves like any hydraulic fluid, i.e. it is not compressible. Therefore, it is necessary to provide additional volume or space to allow for the deposition of the material that the movement of the separator introduces between the casting and the injected part.

Without this additional volume, the separator could not be displaced, as the mould is closed. To do this, the compartment is opened to provide the additional volume for the material displaced by the separator.

The opening movement of the compartment can be operated by any suitable actuator, providing this additional volume capable of accommodating the displaced material, which is preferably somewhat larger than the volume of material to be accommodated, in order to simplify its free accommodation as much as possible. This is achieved using the same operating principle as the actuator that moves the separator, but in reverse.

### Brief description of the drawings

For a better understanding of what has been explained above, some drawings are included in which, schematically and only by way of a non-limiting example, a practical embodiment is represented.

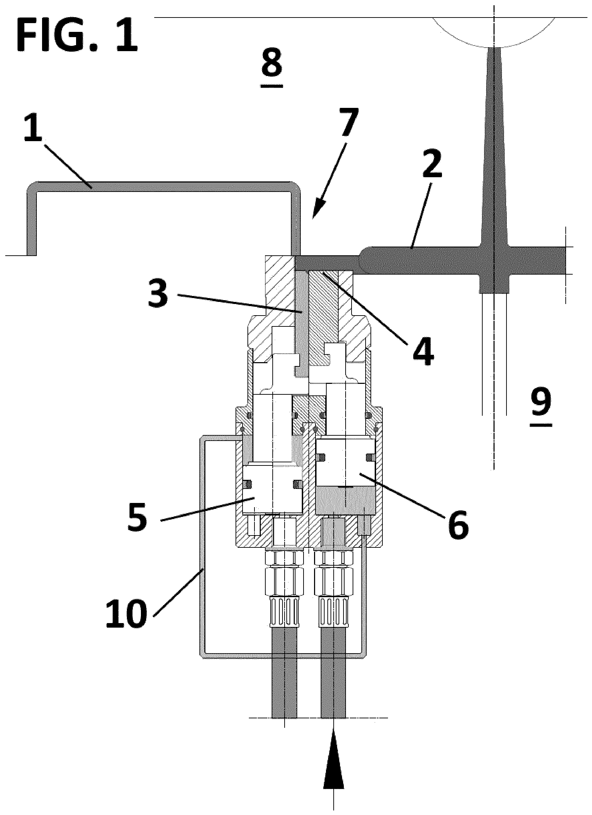

Figure 1 is a schematic view of the injection mould according to the present invention, in its injection phase; and

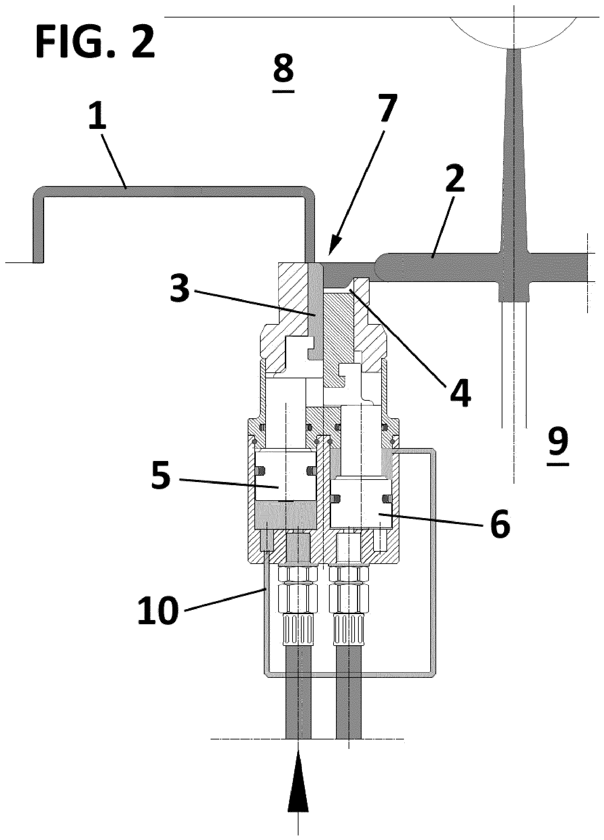

Figure 2 is a schematic view of the injection mould according to the present invention during the separation of the part from the casting.

### Description of a preferred embodiment

The aim of the present invention is to achieve the manufacture of a part (1) using only the injection phase and to achieve the separation of the part (1).

The principle of operation is more focused on the physical transformation of the material itself than on the mechanical way of achieving it.

Any thermoplastic material, in order to be injected, involves abrupt changes in its own structure, as it goes from a solid to a liquid state in a short space of time, and it is at this melting point that material must be injected forming a casting (2).

Nowadays, it is common to use the minimum possible input in order to simplify a second operation of the casting (2) cut, even if this means having to lengthen the injection cycle. However, this also has certain disadvantages, such as forcing the injection pressure and even increasing the injection temperature.

In this aspect, the present invention is specifically focused on the opposite, as the material input is maximised, the injection cycle is decreased and the injection quality is homogenised as much as possible.

Thanks to this type of injection, it is possible to separate the casting (2) from the part (1), as the material's own characteristics are used to fill and seal the mould cavity during the injection phase without the need for conventional abrupt cutting.

Therefore, a separator (3), preferably located in a punch plate (9), is inserted between the casting (2) and the part (1), which makes it possible to separate the casting (2) from the part (1), as if it were a tap, when a cavity (7) located in a cavity plate (8) of the mould is filled.

In order to be able to do this, it is imperative to do it when the material is in the liquid phase, such as at the precise moment when we have just injected the product, and therefore the coordination of the movements of the different components is very important.

These movements can be executed with any type of actuator (5, 6), such as mechanical, hydraulic or with suitable geared motors.

It should be noted that this description focuses on a hydraulic system, although it is obvious that any type of actuator can be used.

According to the embodiment shown, two hydraulic cylinders (5, 6) are used, connected to each other in the shaft area or the low pressure area by means of a duct (10), as if they were communicating vessels. A first hydraulic cylinder (5) is used to advance the separator, while a second hydraulic cylinder (6) is used to open a compartment (4) to house the excess material equivalent to the volume of the separator (3), i.e. when one is raised, the other is lowered.

The compacted mass in a fluid state behaves like any hydraulic fluid, i.e. it is not compressible. Consequently, it is necessary to open some space inside the compacted cavity (7) to allow the movement of the separator (3), which has a certain volume, to close the communication between the cavity (7) and the casting (2), i.e. to separate the casting (2) from the part (1).

If this space were not opened, it would be impossible to insert the separator into the cavity (7) of the mould, so it is necessary to open the compartment (4) mentioned above inside this compacted cavity (7) so that this moving volume can hold at least the volume of the separator (3) that separates the casting (2) from the part (1).

The operation is as follows: once the mould is closed, the injection phase is carried out with the separator (3) in its inactive position and the compartment (4) closed. For this purpose, the coordination of the two hydraulic cylinders (5, 6) to the injection process is enabled. The second cylinder (6) comes into operation and closes the compartment (4), while the first cylinder (5), using the same pressure of the second cylinder (6), pushes back the separator (3) located at the end of the casting (2).

In this way, the passage of the injection material is opened and the material coming from the casting (2) is allowed to fill the cavity (7). At the same moment that the cavity (7) is full, the first cylinder (5) comes into operation, and this first cylinder (5) is the one that displaces the separator (3) to definitively seal the separation between the part (1) and the casting (2), since taking advantage of the pressure of the first cylinder (5), the second cylinder (6) has opened the compartment (4) to house the material that has been displaced by the separator (3).

Once the cycle is finished, the mould ejects the two products, the part (1) and the casting (2) material separately.

The present invention also brings additional benefits, such as improved finishing quality and improved production cycle.

Regarding the quality of the finish, apart from not forcing the cut with abruptness, it is that the whole cooling cycle, which is precisely what defines the final texture, is carried out with the mould completely closed without any subsequent aggression to the visual surface of the product.

The present invention makes it possible to apply much larger material inlets, reducing filling cycles and improving cavity filling without overpressure.

The finish of the product makes it visually easy to find where the part has been injected, and this provides a visual enhancement of each part.

Although reference has been made to a specific embodiment of the invention, it is obvious to a person skilled in the art that the injection mould and method described are susceptible to numerous variations and modifications, and that all the details mentioned can be replaced by technically equivalent ones, without departing from the scope of protection defined by the appended claims.

## Claims

1. Injection mould for manufacturing parts, comprising:
- a cavity plate (8) provided with a cavity (7) into which material forming a part (1) is injected through a casting (2); and
**characterized in that** the injection mould also comprises:
- a separator (3) movable to open or close the communication between the cavity (7) and the casting (2), separating the part (1) from the casting (2) in its closed position; and
- a compartment (4) which is closed when the separator (3) opens the communication between the cavity (7) and the casting (2) and which is open when the separator (3) closes the cavity (7) and the casting (2),
the movements of the separator (3) and the opening and closing of the compartment (4) being synchronized with each other.

2. Injection mould according to claim 1, wherein the separator (3) is movable by means of a first actuator (5).

3. Injection mould according to any one of the preceding claims, wherein the opening and closing movement of the compartment (4) is actuated by a second actuator (6).

4. Injection mould according to claims 2 and 3, wherein the first and second actuators (5, 6) are synchronized with each other.

5. Injection mould according to claim 4, wherein said first and second actuators (5, 6) are hydraulic cylinders.

6. Injection mould according to claim 5, wherein the hydraulic cylinders (5, 6) are connected to each other by means of a conduit (10) between two reservoirs housing the shafts of both cylinders (5, 6), such that when one hydraulic cylinder (5) is displaced in one direction, the second cylinder (6) is displaced in the opposite direction by the hydraulic pressure caused by this displacement.

7. A method for manufacturing parts, **characterized in that** it comprises the following steps:
- injecting a material that will form a part (1) in a fluid state into a cavity (7) of an injection mould through a casting (2);
- closing the communication between the cavity (7) and the casting (2), separating the part (1) from the casting (2) at the end of injection;
- opening a compartment (4) for the material while closing the communication between the cavity (7) and the casting (2) to accommodate the material displaced in the closing step; and
- ejecting the manufactured part (1) when the material has solidified.
